# EUROPEAN PATENT APPLICATION

(11) **EP 4 628 184 A1**
(43) Date of publication of application: **08.10.2025**
(21) Application number: 24171292.6
(22) Date of filing: 19.04.2024
(51) Int. Cl.: B01D 25/21

(54) **FILTER PLATE AND RELATED TRANSPORT METHOD**

(30) Priority: 01.04.2024 PT 2024119360
(71) Applicant: DRY TECH Unipessoal Lda, Porto 4150355 (PT)
(72) Inventor: LIMONTA, Alessandro, Porto (PT)
(74) Representative: Tirloni, Bartolomeo

(57) **Abstract**

Filter plate (1) for a filter press, and related transport method, the filter plate (1) comprising:
- a main body (2) having a contour comprising a first and a second side (4, 5) opposite to each other,
- at least one first secondary body (8) comprising at least one first opening (10) passing through a direction orthogonal to a main development plane (3) of the filter plate (1) to realize a portion of a first fluid conduit when the filter plate is in use in the filter press,
wherein the first secondary body (8) is removably attachable to the main body (2) at the first side (4).

## Description

### Technical Field of the Invention

The present invention relates to a filter plate and a related transport method.

### State of the Art

Filter press machines used for filtering liquids containing suspended solids, such as mining or cement sludges, by applying mechanical pressure, are known. Such machines comprise a series of filter plates, commonly made of steel or polypropylene: between the plates are positioned filter fabrics. The plates form a series of filtration chambers, inside which the liquid solutions to be filtered are pumped. During the filtration process, the liquid solution passes through the filter fabric, which retains the solids and allows the filtered liquid to pass through. The pressure applied to the filter plates helps to separate the solids from the liquid. Once the filtration chambers are filled with solids (commonly called 'cake'), the filter press is opened and the cakes are discharged, manually or through an automatic device or by gravity.

A type of filter press, called membrane filter press, includes a membrane for each filtration chamber to increase the pressure exerted on the sludges inside the chamber.

The shapes and dimensions of the filter plates are determined by the specifications of the filter presses to which they are destined. In some cases, these shapes must meet international standards, to allow interchangeability of the filter plates.

### Summary of the Invention

"Plan view" means a view orthogonal to the main development plane of the plate. "Contour" means the shape of the perimeter of the plate in the plan view.

"Width" means a size of the contour along a first direction, hereinafter also referred to as "width direction", and "height" means a size of the contour along a vertical direction, orthogonal to the width direction.

The Applicant has observed that the known filter plates for filter presses have one or more drawbacks or can be improved in one or more aspects.

In particular, the Applicant has observed that some filter plates, for example those intended for filter presses that do not use plates regulated by international standards, have a shape (e.g. irregular, such as not rectangular) and/or an encumbrance (also due to the irregular shape) that makes transport difficult.

The Applicant has faced the problem of simplifying, and/or reducing the costs of, the transport of filter plates, for example by avoiding the need for dedicated shipping supports, e.g. non-standard shipping supports, and/or exceptional transport vehicle or procedure.

According to the Applicant, the aforementioned problem is solved by a filter plate and a related transport method in accordance with the accompanying claims and/or according to the following aspects and embodiments.

According to one aspect, the invention concerns a filter plate for a filter press. Preferably, the filter plate comprises a main body having a main development plane, said main body having a contour comprising a first and a second side opposite each other.

Preferably, said filter plate comprises at least one first secondary body comprising at least one first opening passing through a direction orthogonal to said main development plane to realize a portion of a first fluid conduit when said filter plate is in use in said filter press. Preferably, said first secondary body is removably attachable to said main body at said first side.

According to one aspect, the invention concerns a method of transport of the filter plate according to the present invention, in one or more of its aspects, comprising transporting said main body without said first secondary body attached to said main body. Preferably, it is provided, at a destination location, to attach said first secondary body to said main body.

According to the Applicant, the fact that the first secondary body is removably attachable to the main body allows the latter to be transported without the first secondary body attached to it. Indeed, the first secondary body, comprising at least one first opening passing through the direction orthogonal to the main development plane (i.e., the direction of the thickness of the plate) to realize, in cooperation with the other filter plates, a first fluid conduit when the filter plate is in use in the filter press, results in a significant increase of the encumbrance of the contour of the main body, typically in a width direction. The separation of the first secondary body from the main body overall makes the transport of the main body (and therefore the plate) more easily as compared to the transport of the one-piece plates of the prior art. For example, the above solution reduces the encumbrance of the main body (typically in the width direction) and/or leaves the first side of the main body free, allowing the main body to be supported on the first side (typically of regular contour, e.g., substantially rectilinear) during transport. The Applicant has also surprisingly discovered that it is possible to removably attach the first secondary body to the main body without jeopardizing the structural strength of the plate during use in the filter press.

The invention, in one or more of its aspects, may have one or more of the following preferred features.

Preferably, said filter plate comprises a further first secondary body comprising at least one respective first opening passing through said direction orthogonal to the main development plane to realize a portion of a respective first fluid conduit when said filter plate is in use in said filter press.

Preferably, said further first secondary body is removably attachable to said main body at said second side. Typically said further first secondary body, when attached to the main body, increases an encumbrance of said contour of the main body in the width direction. In this way, the aforementioned advantages in transport are augmented and/or achieved also at the second side.

Preferably, contours of said first secondary body and said further first secondary body are mutually symmetric with respect to a vertical line of symmetry.

Preferably, said contour of said filter plate and/or said filter plate is/are substantially symmetric (e.g., apart from minor elements such as internal channels) with respect to said vertical line of symmetry or with respect to a symmetry plane orthogonal to said main development plane and passing through said vertical line of symmetry.

Preferably, each of said first secondary body and said further first secondary body has development on said main development plane.

Preferably, the contour of the main body comprises a third and a fourth side opposite each other, more preferably the contour of the main body is substantially rectangular. Preferably, each of said first secondary body and said further first secondary body is removably attachable to said main body at an end of respectively said first and second side, said end being more preferably proximal to said third side.

Preferably, a contour of each of said first secondary body and said further first secondary body is a trapezoid, more preferably rectangular, wherein preferably a respective larger base of said trapezoid is adjacent to respectively said first and second side and wherein a respective side of said trapezoid orthogonal to the respective larger base is aligned with said third side. In this way, the complete plate has a shape suitable for use in a filter press.

Preferably, each of said first secondary body and said further first secondary body comprises a respective second opening passing through said direction orthogonal to the main development plane to realize a portion of a respective second fluid conduit when said filter plate is in use in said filter press. Preferably, each second opening is aligned with the respective first opening along a vertical direction, more preferably has a cross section equal to a cross section of the respective first opening. In this way, the openings, when in use with the filter plates all packed together, realize a plurality of fluid conduits, typically for the filtered liquid exiting from the filtration chambers, having a high overall flow rate. It is noted that since the openings are in the secondary bodies, i.e., in a lateral position, they do not reduce the filtering surface of the filter plate.

Preferably, at least one of said first secondary body and said further first secondary body comprises at least one internal channel that puts in fluid connection the respective first opening, and/or the respective second opening, with a respective further channel formed in said main body and ending into a filtering chamber of the filter plate. Preferably, said internal channel develops orthogonally to said first and/or second side. In this way, when in use, the respective first and/or second fluid conduit communicates with the respective filtration chamber at least at one side of the plate.

Preferably, each of said first secondary body and said further first secondary body has a width greater than or equal to 20 cm, more preferably greater than or equal to 25 cm. In this way, the reduction in width of the plate is notable.

Preferably, each of said first secondary body and said further first secondary body has a height less than or equal to 100 cm, more preferably less than or equal to 90 cm, and/or greater than or equal to 50 cm, more preferably greater than or equal to 60 cm. Preferably, said main body, at said first side, and more preferably also at said second side, comprises a respective recess to receive said first secondary body, and more preferably said further first secondary body respectively. In this way, the attachment of the secondary body is facilitated.

Preferably, said filter plate comprises two second secondary bodies removably attachable to said main body at respectively said first and second sides, more preferably at an end of respectively said first and second side proximal to said fourth side, each second secondary body, when attached to the main body, increasing an encumbrance in width direction of said contour of the main body. Preferably, it is provided to transport said main body even without said second secondary bodies attached to said main body. Preferably, it is provided, at a destination location, to attach said second secondary bodies to said main body. In this way, the transport of the plate is further facilitated.

Preferably, each second secondary body has a respective rectangular contour, more preferably with a long side vertical.

Preferably, each second secondary body has a width less than or equal to 10 cm, more preferably less than or equal to 5 cm. The Applicant has discovered that the removal of the second main bodies, despite their limited width, allows the transport of the main body without the need for exceptional transports.

Preferably, each second secondary body has a height less than or equal to 50 cm, more preferably less than or equal to 40 cm, and/or greater than or equal to 10 cm, more preferably greater than or equal to 20 cm.

Preferably, each of said first secondary body, said further first secondary body, and each second secondary body has a plurality of through holes parallel to the width direction, wherein each of said secondary bodies is removably attachable to said main body through a respective plurality of threaded bolts, each bolt passing through a respective through hole and having one end screwed into a respective threaded hole formed in said main body. In this way, the secondary body is attachable and removable from the main body in an easy and quick manner, while ensuring the desired strength of the attachment. Preferably, said transporting said main body comprises arranging a plurality of main bodies, each one having a respective contour equal to said contour of said main body (preferably each main body has the same features of said main body), on a transport pallet, said main bodies being packed in mutual contact and aligned, with the main development planes of the main bodies mutually parallel. Preferably, said plurality of main bodies comprises at least five main bodies, more preferably at least eight main bodies, and/or less than twenty, more preferably less than fifteen main bodies. In this way, the transport pallet loaded with the main bodies can be transported in a standard 40" High Cube Open Top (HQOPT) container.

Preferably, said transport pallet comprises a base, wherein said main bodies lay on said base at the first or second side, all main bodies preferably laying on the same side.

Preferably, said transport pallet comprises a pair of mutually opposite vertical walls protruding from said base, said plurality of main bodies being contactingly interposed between said two walls. In this way, the overall encumbrance is minimized, providing the desired stability to the whole.

It is noted that some of the characteristics of the first secondary body and/or the further first secondary body, as well as of the second secondary bodies, refer to a state where the relevant secondary body is attached to the main body.

### Brief description of the drawings

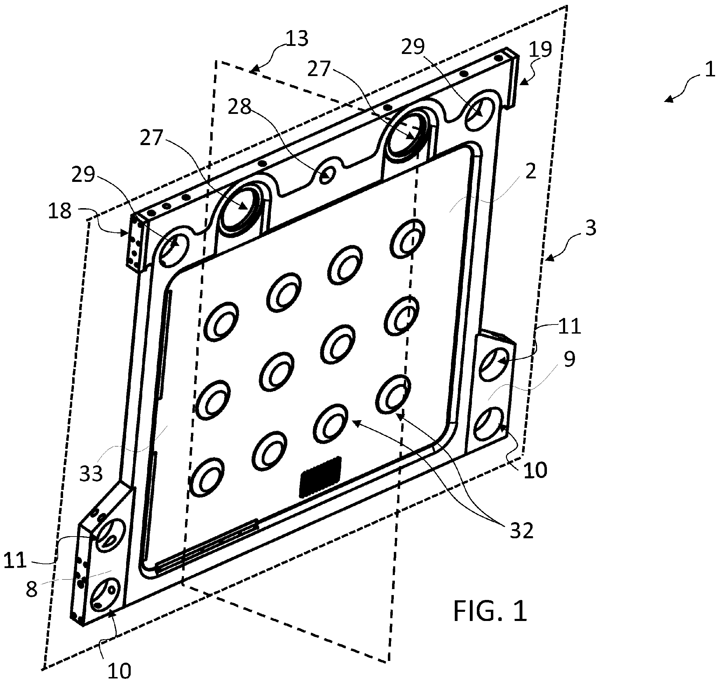

Figure 1 is a partial and schematic perspective view of a filter plate according to the present invention;
figure 2 is a partial and schematic plan view of the filter plate of figure 1;

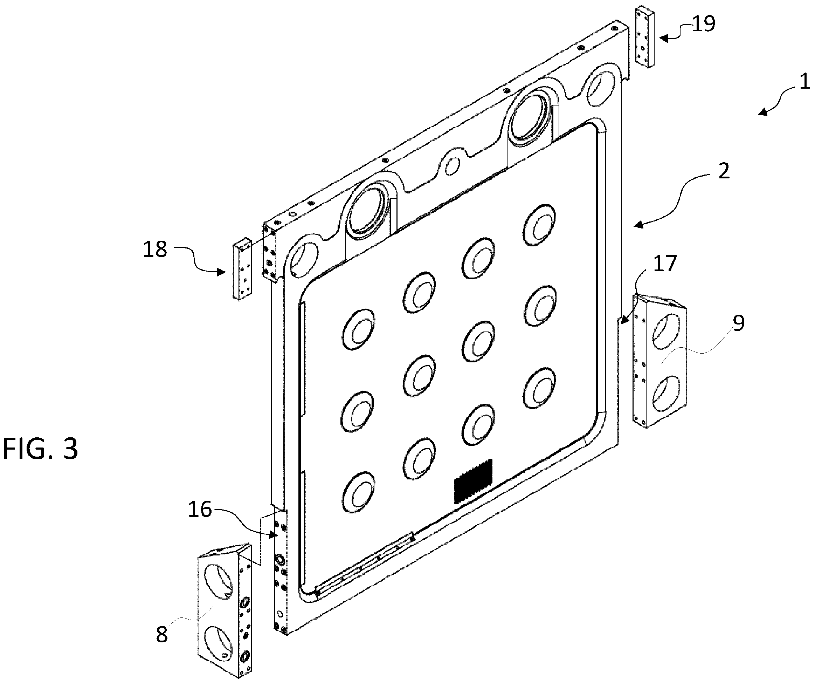

figure 3 is a partial and schematic exploded view of the filter plate of figure 1;
figure 4 is a partial and schematic perspective view of a transport pallet used in the present invention;
figure 5 is a partial and schematic perspective view of a transport pallet loaded with the filter plates according to the present invention.

### Detailed description of embodiments of the invention

The characteristics and advantages of the present invention will be further clarified by the following detailed description of some embodiments, provided byway of example and not limiting the present invention, with reference to the accompanying figures.

The figures show an exemplary filter plate 1 according to the present invention.

The filter plate 1 is used in filter press machine, whose structure and operation will not be described or shown in details since per se known.

In use, many filter plates are contactingly stacked together to create a plurality of filter chambers, each chamber being formed between two adjacent filter plates.

It is noted that in certain types of filter press the stack of filter plates comprises filter plates of different types, for example a first type being membrane filter plates (not shown, e.g. having a flexible membrane to increase pressure on the cake) and a second type being companion filter plates, the two types of plates being mutually interleaved in the stack. In addition, the end filter plates in the stack may be mutually different and different from the filter plates internal to the stack of filter plates.

In general, all the filter plates making up the stack of filter plates share the same contour. The filter plate 1 exemplarily illustrated is a companion filter plate. However, the present invention equally applies to filter plates having a similar contour, independently by the specific function or internal structure of the filter plate.

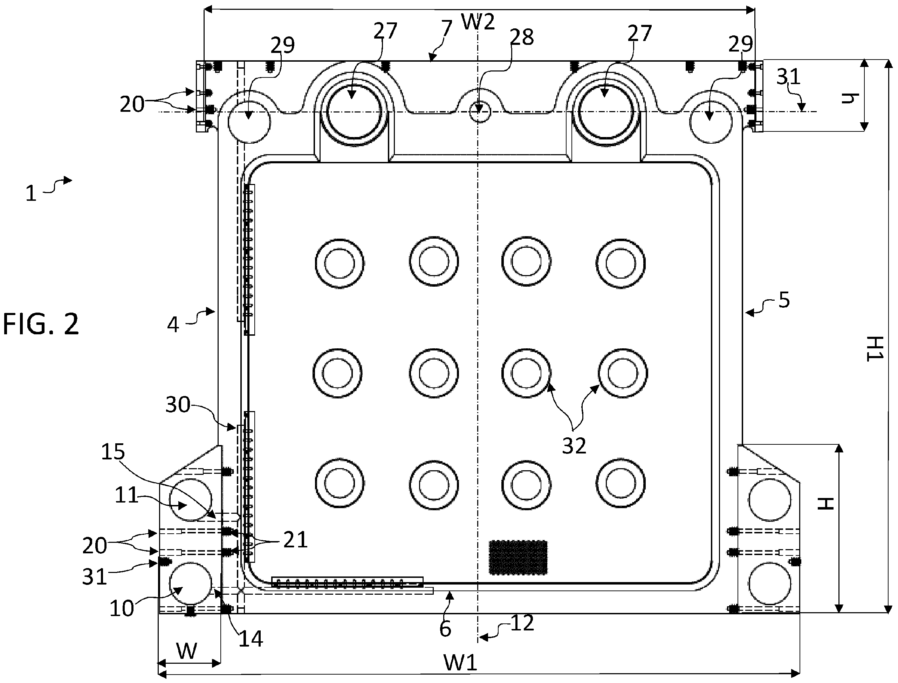

Exemplarily, the filter plate 1 comprises a main body 2 having a main development plane 3, common also to the filter plate as a whole, the main body 2 having a contour (as shown in figure 2) comprising a first side 4 and a second side 5 opposite each other. The first and second side develop vertically.

Exemplarily, the filter plate 1 comprises two first secondary bodies 8, 9 (the at least one secondary body 8 and the further secondary body 9) each one comprising a first and a second opening 10, 11 passing through a direction orthogonal to the main development plane 3. When the filter plate 1 is stacked together with the other filter plates in the filter press, the openings 10, 11 realize a portion of a respective fluid conduit for the filtered liquid solution.

Exemplarily, the second opening 11 is aligned with the first opening 10 along the vertical direction 12, and the second opening 11 has a cross section equal to a cross section of the first opening 10.

Exemplarily, the two first secondary bodies 8, 9 are removably attachable to the main body 2 respectively at the first and second side 4, 5. The secondary bodies 8, 9, when attached to the main body 2, increase an encumbrance in width direction of the contour of the main body 2.

Exemplarily, the contours of the first secondary bodies 8, 9 are mutually symmetric with respect to a vertical line of symmetry 12.

Exemplarily, the contour of the filter plate 1 is symmetric with respect to the vertical line of symmetry 12, and the filter plate 1 is substantially symmetric (e.g., apart from minor elements such as internal channels) with respect to the symmetry plane 13 orthogonal to the main development plane 3 and passing through the vertical line of symmetry 12. Exemplarily, each of the first secondary bodies 8, 9 has development on the main development plane 3.

Exemplarily, the contour of the main body 3 comprises a third and a fourth side 6, 7 opposite each other (and parallel to the width direction), more preferably the contour of the main body 2 is substantially rectangular.

Exemplarily, each of the first secondary bodies is removably attachable to the main body 2 at an end of respectively the first and the second side 4, 5, the end being exemplarily proximal to the third side 6.

Exemplarily, the contour of each of the first secondary bodies is a rectangular trapezoid, wherein exemplarily the respective larger base of the trapezoid is adjacent to respectively the first and second side 4, 5 and wherein a respective side of the trapezoid orthogonal to the respective larger base is aligned with the third side 6 (figure 2).

Exemplarily, the first secondary body 8 comprises two internal channels 14, 15 that put in fluid connection the first and second openings 10, 11 with a respective further channel 30 formed in the main body 2 and ending up in the filtering chamber 33 (formed by the filter plate when stacked with the adjacent filter plate). Exemplarily, the internal channels 14,15 develop orthogonally to the first side 4.

Exemplarily, each of the first secondary body 8, 9 comprises a threaded hole 31 developing along the width direction in which a respective pin (not shown) is threaded to allow the movement of the filter plate 1 during operation of the filter press. It is noted that the further first secondary body lack the aforesaid internal channel for fluid communication,

Exemplarily, each of the first secondary bodies has a width (W) equal about to 29,5 cm and a height (H) equal about to 80,5 cm.

Exemplarily, the main body 2, at each of the first and second side 4, 5, comprises a respective recess 16, 17 to receive the first secondary bodies 8, 9.

Exemplarily, the filter plate 1 comprises two second secondary bodies 18, 19 removably attachable to the main body 2 at respectively the first and second side 4, 5, at an end of respectively first and second side 4, 5 proximal to the fourth side 7, each second secondary body 18, 19, when attached to the main body 2, increasing the encumbrance in width of the contour of the main body 2.

Exemplarily, each second secondary body 18, 19 has a respective rectangular contour with a long side vertical (figure 2).

Exemplarily, each second secondary body 18, 19 has a width (w) equal about to 9,2 cm and a height (h) equal about to 33,5 cm.

Exemplarily, each of the first secondary body 8, 9, and each second secondary body 18, 19 has a plurality of through holes 20 parallel to the width direction, wherein each of the secondary bodies 8, 9, 18, 19 is removably attachable to the main body 2 through a respective plurality of threaded bolts (not shown), each bolt passing through a respective through hole 20 and having one end screwed into a respective threaded hole 21 formed in the main body 2.

Exemplarily, the main body 2 comprises two third openings 27 passing through a direction orthogonal to the main development plane 3 to realize a portion of two fluid conduits for feeding the filter chamber with the liquid solution to be filtered, when the filter plate 1 is stacked together with the other filter plates in the filter press.

Exemplarily the two third openings 27 are aligned along the horizontal direction 31 and share the same cross section.

Exemplarily, the filter plate 1 comprises a fourth opening 28 passing through a direction orthogonal to the main development plane 3. When the filter plate 1 is stacked together with the other filter plates in the filter press the fourth opening 28 realizes a portion of a fluid conduit to inlet the compression fluid for the membranes.

Exemplarily, the main body 2 comprises two fifth openings 29 passing through a direction orthogonal to the main development plane 3 to realize a portion of two fluid conduits for the filtered liquid solution, when the filter plate 1 is stacked together with the other filter plates in the filter press.

Exemplarily the two fifth openings 29 are aligned along the horizontal direction 31 and share the same cross section.

Exemplarily, the main body 2 comprises a plurality (e.g. twelve) of elements 32 protruding from the bottom of the filtering chamber. When the filter plate 1 is stacked together with the other filter plates in the filter press, the protrusions of all the plates come into mutual contact to bear the pressure forces.

Exemplarily the filter plate 1 has a total width (W1) equal to about 305 cm and a total height (H1) equal to about 264 cm.

Exemplarily, the main body 2 has a total width (W2) equal to about 260 cm and a total height (H1) equal to about 17,5 cm.

The Applicant has verified that the above size reduction of the main body with respect to the filter plate allows to avoid special transport vehicle or procedure, such as those needed for exceptional transports.

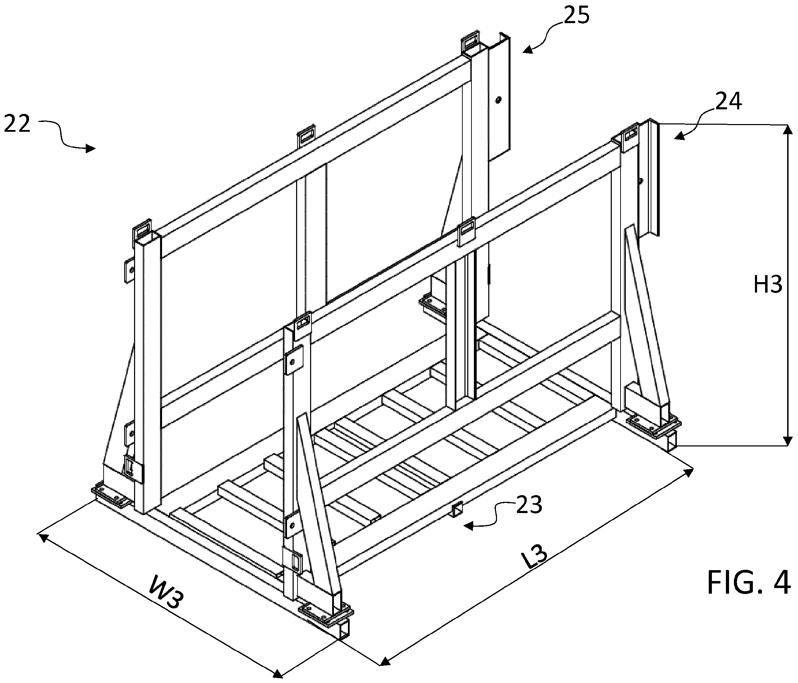

Figure 4 shows a transport pallet 22 for transporting a stack of filter plates 1.

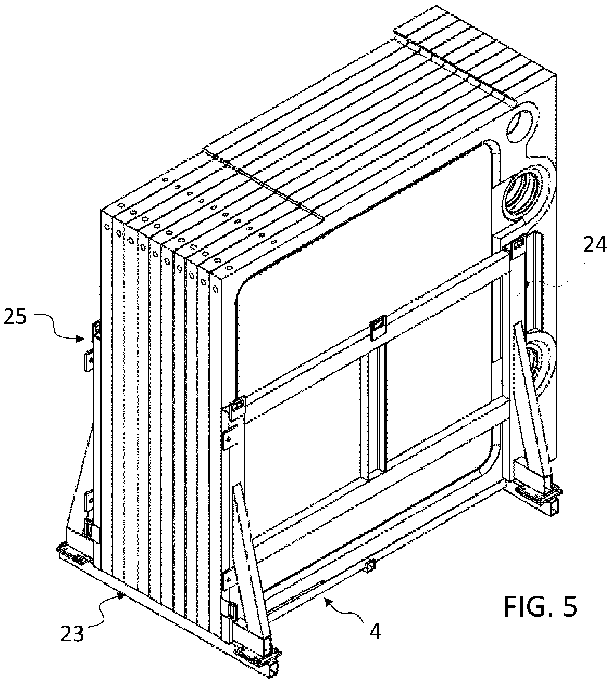

Figure 5 shows the transport pallet 22 loaded with the filter plates 1.

Exemplarily, the transport pallet 22 comprises a base 23 and a pair of mutually opposite vertical walls 24, 25 protruding from the base 23. Exemplarily the transport pallet 22 is made of steel.

Exemplarily, the base 23 has a length (L3) equal to about 227,5 cm and a width (W3) equal to about 165 cm, and each vertical walls 24, 25 has a height (H3) equal to about 264 cm.

In the following a method of transport of the filter plate 1 according to the present invention will be described.

Exemplarily, ten main bodies 3, all having the same contour, are arranged on the transport pallet 22, the main bodies 2 being packed in mutual contact and aligned, with the main development planes 3 of the main bodies 2 mutually parallel. Exemplarily, all the main bodies 2 lay on the base 23 at the respective first side 4.

Exemplarily the plurality of main bodies 2 are contactingly interposed between the two walls 24, 25.

According to the invention, the main bodies 2 are transported without the first secondary bodies 8, 9 and even without the second secondary bodies 18, 19 attached to the main body 2.

Exemplarily, it is provided, at a destination location, to attach the first secondary bodies 8, 9 and the second secondary bodies 18, 19 to the main body 2.

## Claims

1. Filter plate (1) for a filter press, the filter plate (1) comprising:
- a main body (2) having a main development plane (3), said main body (2) having a contour comprising a first and a second side (4, 5) opposite to each other,
- at least one first secondary body (8) comprising at least one first opening (10) passing through a direction orthogonal to said main development plane (3) to realize a portion of a first fluid conduit when said filter plate is in use in said filter press,
wherein said first secondary body (8) is removably attachable to said main body (2) at said first side (4).

2. Filter plate (1) according to claim 1, further comprising a further first secondary body (9) comprising at least one respective first opening (10) passing through said direction orthogonal to the main development plane (3) to realize a portion of a respective first fluid conduit when said filter plate (1) is in use in said filter press, wherein said further first secondary body (9) is removably attachable to said main body at said second side (5).

3. Filter plate (1) according to anyone of the previous claims, wherein said contour of said filter plate (1) is substantially symmetric with respect to a vertical line of symmetry (12), wherein the contour of the main body (2) comprises a third and a fourth side (6, 7) opposite each other, wherein the contour of the main body (2) is substantially rectangular, wherein each of said first secondary body (8) and said further first secondary body (9) is removably attachable to said main body (2) at an end of respectively said first and second side (4, 5), said end being proximal to said third side (6), and wherein said main body (2), at said first side (4) and at said second side (5) comprises a respective recess (16, 17) to receive respectively said first secondary body (8) and said further first secondary body (9).

4. Filter plate (1) according to anyone of the previous claims, wherein said first secondary body (8) and said further first secondary body (9) has development on said main development plane (3), wherein said first secondary body (8) and said further first secondary body (9) are mutually symmetric with respect to a vertical line of symmetry (12), wherein the contour of each of said first secondary body (8) and said further first secondary body (9) is a rectangular trapezoid, wherein a respective larger base of said trapezoid is adjacent to respectively said first and second side (4, 5), wherein a respective side of said trapezoid orthogonal to the respective larger base is aligned with said third side (6), wherein each of said first secondary body (8) and said further first secondary body (9) has a width greater than or equal to 20 cm, and wherein each of said first secondary body (8) and said further first secondary body (9) has a height less than or equal to 100 cm and/or greater than or equal to 50 cm.

5. Filter plate (1) according to anyone of the previous claims, wherein each of said first secondary body (8) and said further first secondary body (9) comprises a respective second opening (11) passing through said direction orthogonal to the main development plane (3) to realize a portion of a respective second fluid conduit when said filter plate is in use in said filter press, wherein each second opening (11) is aligned with the respective first opening (10) along a vertical direction (12), and wherein said second opening (11) has a cross section equal to a cross section of the respective first opening (10).

6. Filter plate (1) according to anyone of the previous claims, wherein at least one of said first secondary body (8) and said further first secondary body (9) comprises at least one internal channel (14, 15) that puts in fluid connection the respective first opening (10), and/or the respective second opening (11), with a respective further channel (30) formed in said main body (2) and ending into a filtering chamber (33), and wherein said at least one internal channel (14, 15) develops orthogonally to said first (4).

7. Filter plate (1) according to anyone of the previous claims, wherein said filter plate (1) comprises two second secondary bodies (18, 19) removably attachable to said main body (2) at respectively said first and second sides (4, 5), at an end of respectively said first and second side (4, 5) proximal to said fourth side (6), wherein each second secondary body (18, 19) has a respective rectangular contour with a long side vertical, and wherein each second secondary body (18, 19) has a width less than or equal to 10 cm and a height less than or equal to 50 cm and/or greater than or equal to 10 cm.

8. Filter plate (1) according to anyone of the previous claims, each of said first secondary body (8), said further first secondary body (9), and each second secondary body (18, 19) has a plurality of through holes (20) parallel to the width direction, wherein each of said secondary bodies (8, 9, 18, 19) is removably attachable to said main body (2) through a respective plurality of threaded bolts, each bolt passing through a respective through hole (20) and having one end screwed into a respective threaded hole (21) formed in said main body (2).

9. Method of transport of the filter plate (1) according to anyone of the previous claims, the method comprising transporting said main body (2) without said first and/or second secondary bodies (8, 9, 18, 19) attached to said main body (2).

10. Method according to claim 9, wherein said transporting said main body (2) comprises arranging a plurality of main bodies (2), each one having a respective contour equal to said contour of said main body (2), on a transport pallet (22), said main bodies (2) being packed in mutual contact and aligned, with the main development planes (3) of the main bodies (2) mutually parallel, wherein, said plurality of main bodies (2) comprising at least five main bodies (2), wherein said transport pallet (22) comprises a base (23), wherein said main bodies (2) lay on said base (23) at the first or second side (4, 5), all main bodies (2) laying on the same side, and wherein said transport pallet (22) comprises a pair of mutually opposite vertical walls (24, 25) protruding from said base (23), said plurality of main bodies (2) being contactingly interposed between said two walls (24, 25).
